# FASCICULE DE BREVET EUROPEEN

(11) **EP 4 053 369 B1**
(45) Date de publication et mention de la délivrance du brevet: **13.03.2024**
(21) Numéro de dépôt: 22158269.5
(22) Date de dépôt: 23.02.2022
(51) Int. Cl.: E05F 3/14, E05F 3/22, E05F 1/10, E05F 1/12, F16H 1/16, F16H 19/00, F16H 57/039

(54) **SYSTÈME DE PIVOTEMENT D'UN SUPPORT D APPAREILLAGE ET APPAREILLAGE À ENCASTRER COMPRENANT UN TEL SYSTÈME DE PIVOTEMENT**
SCHWENKSYSTEM FÜR EINEN GERÄTETRÄGER UND EINBAUGERÄT MIT EINEM SOLCHEN SCHWENKSYSTEM
SYSTEM FOR PIVOTING A SWITCHGEAR MOUNTING AND SWITCHGEAR FOR INSTALLATION COMPRISING SUCH A PIVOTING SYSTEM

(30) Priorité: 01.03.2021 CN 202120441780 U
(43) Date de publication de la demande: 07.09.2022
(73) Titulaire: Legrand France, 87000 Limoges (FR); Legrand SNC, 87000 Limoges (FR)
(72) Inventeur: ZHOU, Yipei, Taizhou, 317300 (CN); LUO, Deyuan, Taizhou, 317300 (CN); DECORE, Raphaël, 72140 SILLE-LE-GUILLAUME (FR); LOCHET, Anthony, 72170 MEURCE (FR); GALLY, Raphaël, 72190 COULAINES (FR)
(74) Mandataire: Jacobacci Coralis Harle

(56) Documents cités:
- CN-U- 203 850 477
- US-A1- 2015 218 864
- US-A1- 2020 291 681

## Description

La présente invention concerne, de manière générale, les appareillages à encastrer dans une paroi, dont le mécanisme est monté sur un support basculant pour disparaître sous la paroi ou être accessible en saillie d'une telle paroi.

L'invention trouve une application particulièrement avantageuse dans la réalisation notamment d'une prise de courant ou d'une prise USB, de sol ou de bureau ou encore murale.

L'invention concerne plus particulièrement un système de pivotement d'un support d'appareillage, qui comprend un arbre d'entraînement en rotation, un amortisseur, un ressort de torsion sous contrainte lié à l'arbre d'entraînement en rotation, et un dispositif de réglage de la contrainte de torsion initiale du ressort de torsion, qui comprend une roue dentée liée au ressort de torsion et une vis de réglage dont le corps fileté coopère avec le crantage de la roue dentée de sorte que le vissage/dévissage de la vis de réglage provoque la rotation de la roue dentée autour de son axe.

On connaît déjà, notamment des documents FR3103642,CN203850477 et US 2015/218864 A1 un système de pivotement du type précité.

Les appareillages à support basculant actionné par un tel système de pivotement, sont le plus souvent utilisés dans un environnement de bureau ou de cuisine équipée où les utilisateurs recherchent des produits robustes.

Ils présentent une cinématique d'ouverture/fermeture qui doit tenir 30000 cycles sans détérioration pour répondre à la robustesse attendue. Cette cinématique est directement liée à la contrainte de torsion du ressort de torsion dont le réglage est réalisé en usine par serrage de la vis de réglage. Ce réglage peut être affiné par l'installateur pour tenir compte de la variété des situations liée au poids des mécanismes, à celui des câbles ou encore à la raideur de ces derniers.

Lors d'essais en laboratoire, au fil des cycles d'ouverture/fermeture, il a été constaté un relâchement de la vis de réglage qui maintient sous contrainte le ressort de torsion, d'où une perte de puissance du système de pivotement à l'ouverture, des bruits à l'ouverture et à le fermeture du produit.

Enfin, le document US2020291681 divulgue un engrenage à vis sans fin qui n'est pas lié à un système de pivotement d'un support d'appareillage, dans lequel il est prévu un élément agissant directement sur la vis sans fin pour la bloquer en position.

Afin de remédier à aux inconvénients précités, la présente invention propose un système de pivotement tel que défini dans la revendication 1.

D'autres caractéristiques du système de pivotement conforme à l'invention sont énoncées dans les revendications 2 à 11.

L'invention concerne également un appareillage à encastrer dans une paroi de réception, qui comprend un support d'appareillage, un système de pivotement tel que précité et deux bielles parallèles, agencées de manière à transmettre le mouvement de rotation de l'arbre d'entraînement en rotation audit support d'appareillage.

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'un côté d'un premier mode de réalisation du système de pivotement selon l'invention,
[Fig. 2] est une vue schématique en perspective d'un côté opposé du système de pivotement de la figure 1,
[Fig. 3] est une vue de dessus de la figure 1,
[Fig. 4] est une vue en coupe selon le plan B-B de la figure 3,
[Fig. 5] est une vue schématique en perspective partiellement éclatée du système de pivotement de la figure 1,
[Fig. 6] est une vue schématique en perspective de la partie assemblée de la figure 5,
[Fig. 7] est une vue éclatée de la figure 6,
[Fig. 8] est une vue schématique en perspective d'un côté d'un deuxième mode de réalisation du système de pivotement selon l'invention,
[Fig. 9] est une vue schématique en perspective d'un côté opposé du système de pivotement de la figure 8,
[Fig 10] est une vue de dessous de la figure 8,
[Fig. 11] est une vue en coupe selon le plan A-A de la figure 10,
[Fig. 12] est une vue schématique en perspective partiellement éclatée du système de la figure 8,
[Fig. 13] est une vue schématique de dessus de la partie assemblée de la figure 12,
[Fig. 14] est une vue schématique en perspective de la figure 13, et
[Fig. 15] est une vue partielle éclatée de la figure 14.

Sur les différentes figures on a représenté deux modes de réalisation d'un système de pivotement 100 ; 200 d'un support d'appareillage (non représenté sur les figures).

Un tel système de pivotement fait avantageusement partie d'un appareillage à encastrer dans une ouverture d'une paroi de réception dont le support d'appareillage est basculant pour disparaître sous cette paroi ou être accessible en saillie de celle-ci.

La paroi de réception peut être une paroi d'un mobilier de bureau tel qu'une table de travail ou un meuble de rangement ou encore une paroi de plancher technique.

L'appareillage peut être une prise de courant, une prise USB, une prise RJ45, une prise téléphonique ou encore une prise d'antenne ou encore un bloc multiprise. Il pourrait s'agir d'un appareillage électronique.

Un exemple d'un tel appareillage est décrit en détail dans les documents brevets FR3103642 et EP3829015 appartenant aux demanderesses et auxquels on pourra se reporter pour bien comprendre comment un tel appareillage est réalisé et comment il fonctionne.

Pour l'essentiel, un tel appareillage comporte :
- une plaque de façade se présentant sous la forme d'un cadre délimitant une ouverture centrale ;
- un support d'appareillage monté à basculement au travers de l'ouverture centrale de la plaque de façade, entre une position abaissée dans laquelle il s'étend en dessous de la plaque de façade et une position relevée dans laquelle il s'étend en majeure partie au-dessus de la plaque de façade;
- un système de pivotement 100 ; 200 du support d'appareillage; et
- un système de verrouillage, débrayable à l'aide d'une touche d'actionnement, pour bloquer le support d'appareillage dans l'une ou l'autre de ses positions abaissée et relevée.

La plaque de façade de l'appareillage est une pièce avantageusement réalisée en matière métallique. Elle est destinée à s'appliquer contre la face avant de la paroi de réception de l'appareillage, autour de l'ouverture d'encastrement. Le bord extérieur de cette plaque de façade peut suivre un contour carré, rectangulaire ou circulaire ou encore oblong. L'ouverture centrale de cette plaque de façade peut être une ouverture carrée, rectangulaire, circulaire ou oblongue.

La face avant de la plaque de façade participe à l'esthétique de l'ensemble tandis que la face arrière de la plaque de façade porte des éléments techniques pour le logement et la fixation de différents éléments de l'appareillage. La face arrière de la plaque de façade présente une surface plane pour prendre appui contre la paroi de réception. Cette surface plane reçoit avantageusement un joint d'étanchéité à l'eau et aux poussières, ce joint permettant d'épouser les irrégularités éventuelles de la face avant de la paroi de réception.

Le support d'appareillage est réalisé avantageusement en matière métallique. Il se présente sous la forme d'un boîtier parallélépipédique avec deux parois latérales principales parallèles qui s'étendent perpendiculairement au plan moyen du cadre de la plaque de façade, reliées entre elles par des poutres transversales, un carénage inférieur qui ferme l'espace interne défini entre lesdites parois latérales principales et un cadre de façade, rapporté entre les deux parois latérales principales et une des poutres du support d'appareillage, qui délimite une ou deux ouvertures d'accès à l'espace interne défini entre les parois latérales principales du support d'appareillage.

Des mécanismes d'appareillage sont rapportés dans la ou les ouvertures du cadre de façade de manière que les socles de ces mécanismes sont encliquetés ou emboîtés sur les montants de ce cadre de façade et s'étendent à l'intérieur dudit espace interne, et que les enjoliveurs ferment la ou lesdites ouvertures dudit cadre de façade.

La façade fonctionnelle de l'appareillage est formée par les faces avant fonctionnelles des enjoliveurs desdits mécanismes d'appareillage rapportés sur le support d'appareillage.

L'appareillage comprend un couvercle destiné à fermer l'ouverture centrale de la plaque de façade lorsque le support d'appareillage est basculé en position abaissée. Le couvercle se présente sous la forme d'une plaque solidarisée par des vis aux parois latérales principales du support d'appareillage et montée à pivotement sur le cadre de la plaque de façade autour d'un axe parallèle à un côté de ladite plaque de façade.

Une des parois latérales principales du support d'appareillage porte sur sa face externe, à proximité d'un bord arrière opposé à la façade fonctionnelle de l'appareillage, un élément de butée destiné à s'engager dans la rainure de butée de la plaque de façade lorsque le support d'appareillage bascule depuis sa position abaissée vers sa position relevée. La mise en butée de cet élément de butée contre le fond de la rainure de butée permet d'indexer la position stable relevée du support d'appareillage.

Les parois latérales principales du support d'appareillage sont, à l'arrière dudit support, c'est-à-dire à l'opposé de la façade dudit support, liées par deux bielles aux deux extrémités d'un arbre d'entraînement en rotation du système de pivotement 100 ; 200. Ces bielles parallèles sont agencées de manière à transmettre le mouvement de rotation de l'arbre d'entraînement en rotation audit support d'appareillage.

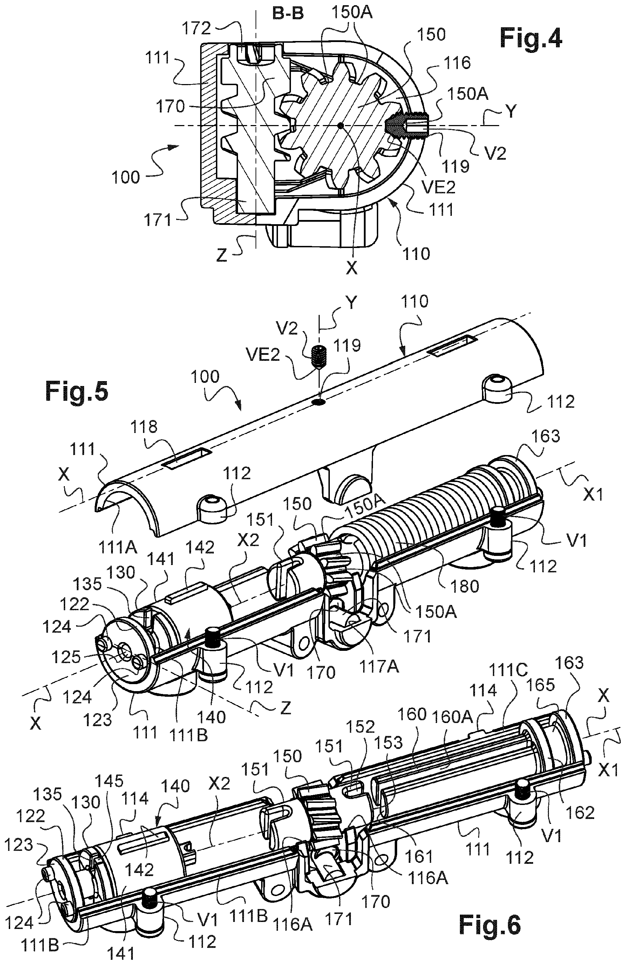

Comme le montrent plus particulièrement les figures 5 à 7 et 12 à 15, quel que soit le mode de réalisation représenté, le système de pivotement 100 ; 200 comprend, à l'intérieur d'un boîtier 110, 210, un arbre d'entraînement en rotation 120, 165 ; 220, 265, un amortisseur 140 ;240, un ressort de torsion 180 sous contrainte lié à l'arbre d'entraînement en rotation et un dispositif de réglage de la contrainte de torsion initiale du ressort de torsion, qui comprend une roue dentée 150 ; 250 liée au ressort de torsion 180 ainsi qu'une vis de réglage 170; 270 dont le corps fileté coopère avec le crantage de la roue dentée de sorte que le vissage/dévissage de la vis de réglage 170 ; 270 provoque la rotation de la roue dentée 150 ; 250 autour de son axe. La vis de réglage 170 ; 270 est une vis sans fin.

Selon une variante non représentée, on pourrait prévoir que le système de pivotement comprenne deux ressorts de torsion associés à deux amortisseurs comme c'est le cas dans le système de pivotement décrit dans les documents FR3103642 et EP3829015.

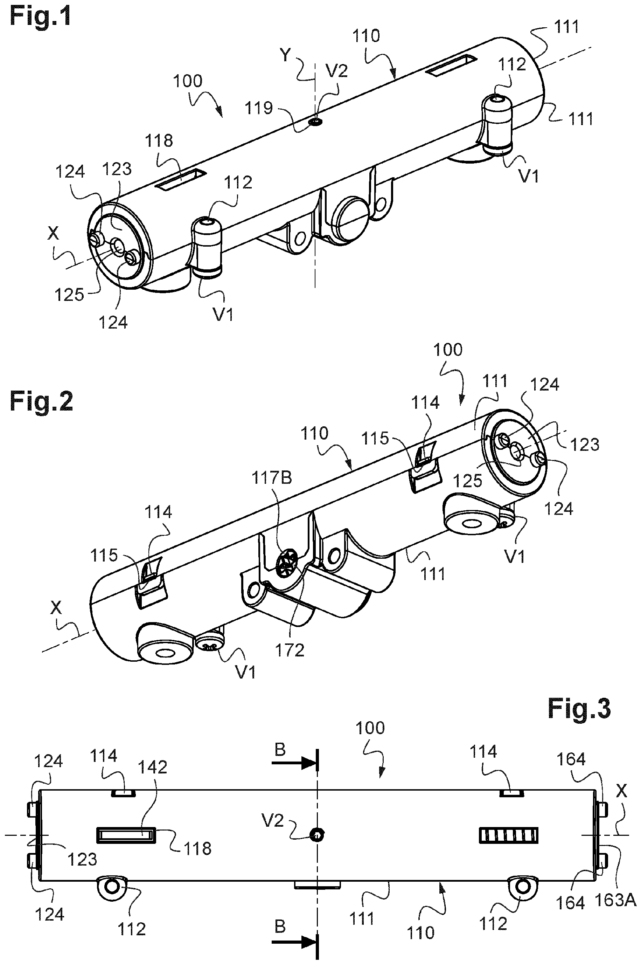

Le boîtier 110 ; 210 présente une forme globalement cylindrique allongée selon un axe X. Il comporte aux extrémités deux ouvertures circulaires 111A ;211A. Il est formé de deux coques 111; 211 globalement semi cylindriques, positionnées bord à bord et solidarisées l'une à l'autre le long de leurs bords longitudinaux 111B,111C ; 211B,211C. Les moyens de solidarisation des deux coques 111; 211 comportent un système d'encliquetage et un système de vissage. Le système d'encliquetage comporte le long d'un bord longitudinal 111C ; 211C d'une des coques 111 ; 211 des dents 114 ; 214 et le long du bord longitudinal 111C ; 211C correspondant de l'autre coque 111 ; 211 des fenêtres 115 ; 215 dans lesquelles s'encliquètent les dents 114 ; 214. Le système de vissage comporte le long des deux autres bords longitudinaux correspondants 111B ; 211B des deux coques 111 ; 211 des cheminées taraudées 112 ; 212 dans lesquelles sont vissées des vis V1 (voir figures 1, 2, 5, 6, 8, 9, 12, 13 et 14).

Selon les exemples représentés sur les figures, en son centre, le boîtier 110 ; 210 loge ledit dispositif de réglage. A cet effet, il comporte un logement 116 ; 216 de forme adéquate qui accueille la roue dentée 150 ; 250 coopérant avec le filetage de la vis de réglage 170 ; 270 dont l'extrémité 171 ; 271 est engagée dans une encoche interne 117A ; 217A du boîtier 110 ; 210 et dont la tête de manoeuvre 172 ; 272 est engagée dans une ouverture circulaire 117B ; 217B d'une face latérale du boîtier 110 ; 210, au travers de laquelle elle est accessible à un installateur (voir figures 2, 5, 6, 7, 9, 12 à 15).

Selon les premier et deuxième modes de réalisation du système de pivotement 100 ; 200 représentés sur les figures 5 à 7 et 12 à 15, deux plots cylindriques 151 ; 251 identiques, liés directement à la roue dentée 150 ; 250, s'étendent selon un axe X2 de part et d'autre de ladite roue dentée 150 ;250. L'axe X2 est l'axe de rotation de la roue dentée 150 ;250. Lorsque la roue dentée 150 ;250 est positionnée dans le logement 116 ;216 au centre du boîtier 110 ;210, l'axe X2 se confond avec l'axe X du boîtier 110 ;210 si bien que la roue dentée 150 ;250 présente l'axe X comme axe de rotation. Il est avantageusement prévu à l'intérieur des coques 111 ;211 du boîtier 110 ;210, de part et d'autre du logement 116 ;216, des berceaux semi-cylindriques 116A ;216A qui entourent les plots cylindriques 151 ;251 de façon à centrer la roue dentée 150 sur l'axe de rotation X. La vis de réglage 170 s'étend selon un axe Z perpendiculaire à l'axe X, elle tourne autour de l'axe Z en coopérant avec la denture ou le crantage de la roue dentée 150 ;250.

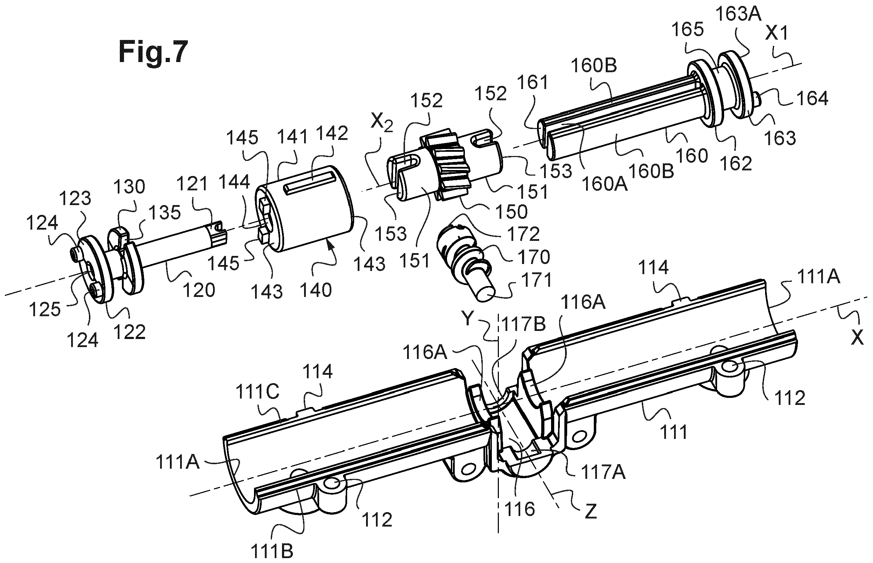

Selon le premier mode de réalisation du système de pivotement 100 représenté sur les figures 5 à 7, chaque plot cylindrique 151 est fendu d'une fente 152 axiale qui débouche à l'extrémité libre 153 du plot cylindrique 151 (voir figure 7). La roue dentée 150 et les deux plots cylindriques 151 appartiennent à une seule pièce monobloc métallique.

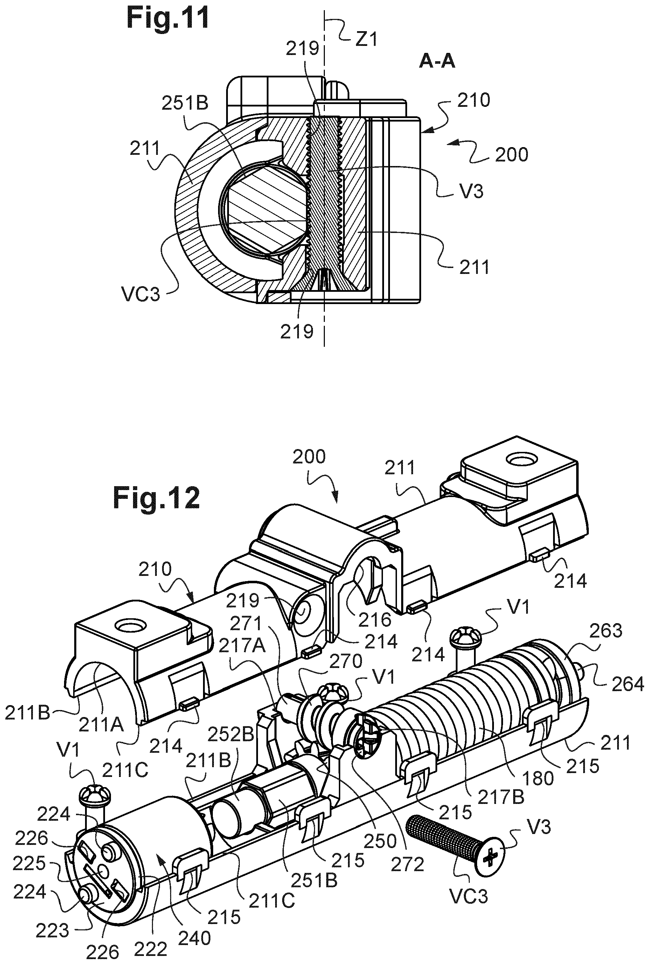

Selon le deuxième mode de réalisation du système de pivotement 200 représenté sur les figures 12 à 15, il est prévu sur un côté de la roue dentée 250 (situé à gauche sur les figures 12 à 15), suivant l'axe X2, un premier plot supplémentaire 251B qui s'étend à partir dudit plot cylindrique 251 et dont la surface externe présente un profil hexagonal ainsi qu'un plot cylindrique d'extrémité 252B qui s'étend à partir du plot supplémentaire 251B. Il est également prévu sur l'autre côté de la roue dentée 250 (situé à droite sur les figures 12 à 15), un axe de guidage 251A qui s'étend suivant l'axe X2 à partir dudit plot cylindrique 251. Cet axe de guidage 251A est un cylindre fendu axialement par une fente 252A qui débouche à l'extrémité libre 253 dudit cylindre de sorte qu'elle le sépare en deux demicylindres 251A.

Lorsque la roue dentée 250 est placée dans le logement 216 au centre du boîtier 210, les plots cylindriques 251, le plot supplémentaire 251B au profil hexagonal, le plot cylindrique d'extrémité 252B et l'axe de guidage 251A présentent comme axe commun l'axe X du boîtier 210.

La roue dentée 250, les plots cylindriques 251, le plot supplémentaire 251B au profil hexagonal, le plot cylindrique d'extrémité 252B et l'axe de guidage 251A appartiennent à une seule pièce monobloc métallique.

Selon ce deuxième mode de réalisation, il est avantageusement prévu dans les deux coques 211 deux berceaux semi cylindriques 202 qui entourent le plot cylindrique d'extrémité 252B de façon à centrer la roue dentée 250 sur l'axe de rotation X. Ainsi, ici, les deux plots 251 liés directement à la roue dentée 250 et le plot cylindrique d'extrémité 252B lié indirectement à la roue dentée 250, sont entourés par des surfaces cylindriques 216A, 202 du boîtier 210, centrées sur l'axe X du boîtier 210, pour assurer le centrage de la roue dentée 250 sur ledit axe X du boîtier 210.

Quel que soit le mode de réalisation du système de pivotement 100 ; 200, il est prévu à l'intérieur du boîtier 110 ;210, de part et d'autre de la roue dentée 150 ;250, un système d'entraînement en rotation.

Ce système d'entraînement en rotation comprend d'un côté de la roue dentée 150 ;250 (situé à gauche sur les figures 5 à 7 et 12 à 15), une première partie 120 ;220 de l'arbre d'entraînement en rotation et, de l'autre côté de la roue dentée 150 ;250 (situé à droite sur les figures 5 à 7 et 12 à 15), une deuxième partie 165 ;265 de l'arbre d'entraînement en rotation. Le deux parties 120, 165 ;220,265 de l'arbre d'entraînement en rotation sont alignées selon un axe X1 confondu avec l'axe X2 desdits plots cylindriques 151 ;251.

Lorsque ces deux parties 120,165 ;220,265 de l'arbre d'entraînement en rotation sont montées dans le boîtier 110 ;210, les axes X1 et X2 sont confondus avec l'axe X dudit boîtier 110 ;210 (voir figures 5, 6 et 13).

Ici, les première et deuxième parties 120, 165 ;220,265 de l'arbre d'entraînement en rotation sont différentes mais elles pourraient être identiques comme c'est le cas dans le système de pivotement décrit dans les documents FR3103642 et EP3829015.

Chacune des première et deuxième parties 120,165 ;220,265 de l'arbre d'entraînement en rotation est une pièce monobloc métallique.

La première partie 120 ;220 de l'arbre d'entraînement en rotation présente une extrémité pourvue d'une fente 121 ;221 et une extrémité pourvue d'un disque 122 ;222 qui ferme une ouverture circulaire 111A ;211A d'extrémité du boîtier 110 ;210. La face externe 123 ;223 du disque 122 ;222, c'est-à-dire la face du disque 122 ;222 tournée vers l'extérieur du boîtier 110 ;210 lorsque le disque 122 ;222 ferme l'ouverture circulaire 111A ;211A d'extrémité du boîtier 110 ;210, porte deux tétons 124 ;224 en saillie placés de manière diamétralement opposée par rapport au centre du disque 122 ;222.

Selon le premier mode de réalisation du système de pivotement 100 représenté sur les figures 5 à 7, une collerette annulaire 130 est positionnée sur cette première partie 120 de l'arbre d'entraînement en rotation, à proximité du disque 122 d'extrémité. Cette collerette annulaire 130 comporte dans son bord externe circulaire, deux encoches 135 placées de manière diamétralement opposée par rapport au centre de la collerette.

Selon le deuxième mode de réalisation du système de pivotement 200 représenté sur les figures 12 à 15, le disque 222 d'extrémité de la première partie 220 de l'arbre d'entraînement comporte deux ouvertures 226 positionnées de manière diamétralement opposée par rapport au centre du disque 222.

Enfin, la première partie 120 ;220 de l'arbre d'entraînement en rotation comporte un conduit taraudé 125 ;225 qui débouche au centre de la face externe 123 ;223 du disque 122 ;222.

Le système d'entraînement en rotation comporte un amortisseur 140 ;240 lié à la première partie 120 ;220 de l'arbre d'entraînement en rotation.

L'amortisseur 140 ;240 est tout à fait classique. Il comporte un cylindre externe 141 ;241 et un cylindre interne 144 concentriques autour de l'axe X ainsi qu'une matière visqueuse prévue entre les deux cylindres. Le cylindre externe 141 ;241 porte sur sa face externe une nervure 142 ;242 s'étendant suivant une génératrice du cylindre externe 141 ;241 (voir figures 5 à 7 et figures 13 et 14). Cette nervure 142 ;242 est reçue dans une fenêtre 118 ;218 prévue dans la paroi d'une des coques 111 ;211 du boîtier 110 ;210 de sorte que le cylindre externe 141 ;241 de l'amortisseur 140 ;240 est fixe dans le boîtier 110 ;210. Le cylindre interne 144 de l'amortisseur 140 ;240 est capable de tourner dans le cylindre externe 141 ;241, en frottant sur la matière visqueuse. Chaque extrémité du cylindre interne 144 est équipée d'un disque annulaire 143 ;243 qui ferme l'espace interne cylindrique prévu entre les cylindres externe 141 ;241 et interne 144, rempli de la matière visqueuse.

La face externe d'un disque annulaire 143 ; 243 (celui situé du côté du disque 122 ;222 d'extrémité de la première partie 120 ;220 de l'arbre d'entraînement en rotation) porte deux plots 145 placés de manière diamétralement opposée par rapport au centre du disque annulaire 143 ;243.

Comme le montrent plus particulièrement les figures 5, 6, 12 et 14, dans le boîtier 110 ;210, la première partie 120 ;220 de l'arbre d'entraînement en rotation est enfilée au travers du cylindre interne 144 de l'amortisseur 140 ;240 de sorte que le disque 122 ; 222 ferme l'ouverture circulaire 111A ;211A d'extrémité du boîtier 110 ;210 et que l'extrémité fendue 121 ;221 émerge à l'extérieur de l'amortisseur 140 ;240, en face et à distance de l'extrémité du plot cylindrique 151 ;252B lié directement ou indirectement à la roue dentée 150 ;250. Concomitamment, les plots 145 du disque 143 ;243 de l'amortisseur 140 ;240 sont engagés dans les encoches 135 de la collerette 130 annulaire (selon le premier mode de réalisation) ou dans les ouvertures 226 prévues en correspondance dans le disque 222 d'extrémité (selon le deuxième mode de réalisation) de manière à lier l'amortisseur 140 ;240 à la première partie 120 ;220 de l'arbre d'entraînement en rotation.

Selon les exemples représentés sur les figures, l'ensemble formé par la première partie 120 ;220 de l'arbre d'entraînement en rotation et l'amortisseur 140 ;240 auquel il est lié, est dissocié de la roue dentée 150 ;250 en ce sens qu'il n'est prévu aucun élément pour établir une quelconque liaison mécanique entre cet ensemble et la roue dentée 150 ;250.

Bien entendu, on pourrait prévoir selon une variante non représentée, comme dans le système de pivotement décrit dans les documents FR3103642 et EP3829015, qu'un ressort de torsion soit lié, d'une part, à l'extrémité fendue de la première partie de l'arbre d'entraînement, et, d'autre part, au plot cylindrique correspondant lié à ladite roue dentée.

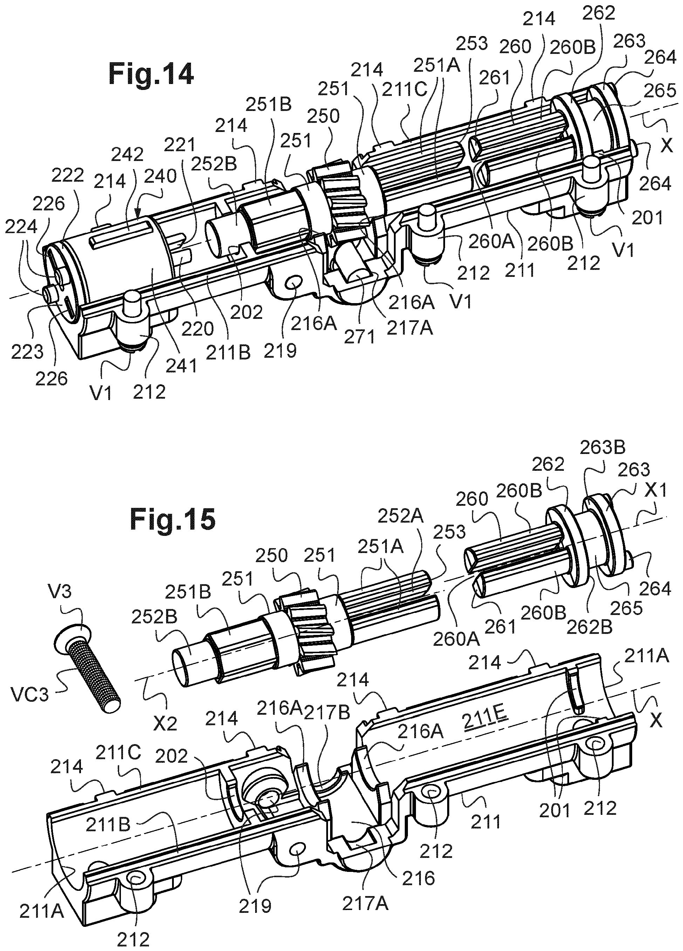

Comme le montrent les figures 7 et 15, la deuxième partie 165 ;265 de l'arbre d'entraînement en rotation est un tourillon cylindrique d'axe X1 qui présente une section supérieure et une longueur plus courte par rapport à la section et à la longueur de la première partie 120 ;220. En effet, la section du tourillon cylindrique est ici pratiquement identique à la section des plots cylindriques 151 ;251 liés à la roue dentée 150 ;250. Comme la première partie 120 ; 220, la deuxième partie 165 ;265 de l'arbre d'entraînement en rotation comporte, à une de ses extrémités, un premier disque 163 ;263 qui ferme l'autre ouverture circulaire 111A ;211A d'extrémité du boîtier 110 ;210. La face externe 163A ;263A du premier disque 163 ;263, c'est-à-dire la face du disque 163 ;263 tournée vers l'extérieur du boîtier 110 ;210 lorsque le disque 163 ;263 ferme l'ouverture circulaire 111A ;211A d'extrémité du boîtier 110 ;210, porte deux tétons 164 ;264 en saillie placés de manière diamétralement opposée par rapport au centre du disque 163 ;263. Cette deuxième partie 165 ;265 comporte, à son autre extrémité, un deuxième disque 162 ;262 de diamètre identique au diamètre du premier disque 163 ;263. En outre, il est prévu un axe de guidage 160 ;260 qui s'étend suivant l'axe X1 à partir du deuxième disque 162 ;262. Cet axe de guidage 160 ;260 est un cylindre fendu axialement par une fente 160A ;260A qui débouche à l'extrémité 161 ;261 dudit cylindre de sorte qu'elle le sépare en deux demicylindres 160B ;260B.

La longueur de l'axe de guidage 160 lié à la deuxième partie 165 de l'arbre d'entraînement en rotation selon le premier mode de réalisation du système de pivotement 100 (voir les figures 6 et 7) est nettement supérieure à la longueur de l'axe de guidage 260 lié à la deuxième partie 265 de l'arbre d'entraînement en rotation selon le deuxième mode de réalisation du système de pivotement 200 (voir les figures 14 et 15),

Comme le montre plus particulièrement la figure 6, selon le premier mode de réalisation représenté, lorsque la deuxième partie 165 de l'arbre d'entraînement en rotation est positionnée dans le boîtier 110 (à droite de la roue dentée 150 sur la figure 6), l'axe de guidage 160, qui s'étend selon l'axe X, remplit l'espace compris entre le deuxième disque 162 et l'extrémité fendue 152 du plot cylindrique 151 lié à ladite roue dentée 150. L'extrémité 153 dudit plot cylindrique 151 fait face à l'extrémité 161 dudit axe de guidage 160.

Comme le montrent plus particulièrement les figures 14 et 15, selon le deuxième mode de réalisation représenté, la longueur de l'axe de guidage 251A lié à la roue dentée 250 est identique ou pratiquement identique à la longueur de l'axe de guidage 260 lié à la deuxième partie 265 de l'arbre d'entraînement en rotation. Lorsque la deuxième partie 265 de l'arbre d'entraînement en rotation est positionnée dans le boîtier 210 (à droite de la roue dentée 250 sur la figure 14), l'axe de guidage 260 s'étend selon l'axe X dans le prolongement de l'axe de guidage 251A lié à la roue dentée 250 de façon que les deux axes de guidage 251A ;260 alignés remplissent l'espace compris entre le deuxième disque 262 de la deuxième partie 265 de l'arbre d'entraînement en rotation et le plot cylindrique 251 lié à ladite roue dentée 250. L'extrémité libre 253 de l'axe de guidage 251A lié à la roue dentée 250 fait face à l'extrémité libre 261 de l'axe de guidage 260 lié à la deuxième partie 265 de l'arbre d'entraînement en rotation.

Avantageusement, selon le deuxième mode de réalisation, il est prévu sur la face intérieure 211E de chaque coque 211 du boîtier 210 une nervure 201 apte à se placer contre une face 262B du deuxième disque 262 tournée vers la face 263B correspondante du premier disque 263 de la deuxième partie 265 de l'arbre d'entraînement en rotation. Cette nervure 201 forme une butée qui limite les éventuels déplacements en translation selon l'axe X de la deuxième partie 265 de l'arbre d'entraînement.

Enfin, la deuxième partie 165 ;265 de l'arbre d'entraînement en rotation comporte un conduit taraudé (non visible sur les figures) qui débouche au centre de la face externe 163A ;263A du premier disque 163 ;263.

Selon les deux modes de réalisation représenté, le système d'entraînement en rotation comporte un ressort de torsion 180.

Selon le premier mode de réalisation représenté sur la figure 5, pratiquement toute la longueur du ressort de torsion 180 est enroulée autour de l'axe de guidage 160 attaché à la deuxième partie 165 de l'arbre d'entraînement en rotation. Le ressort de torsion 180 présente, d'une part, une extrémité engagée dans la fente 152 d'un plot cylindrique 151 lié à la roue dentée 150 de manière à être liée à cette roue dentée 150, et, d'autre part, une autre extrémité engagée dans la fente 160A de l'axe de guidage 160 de manière à être liée à ladite deuxième partie 165 de l'arbre d'entraînement en rotation.

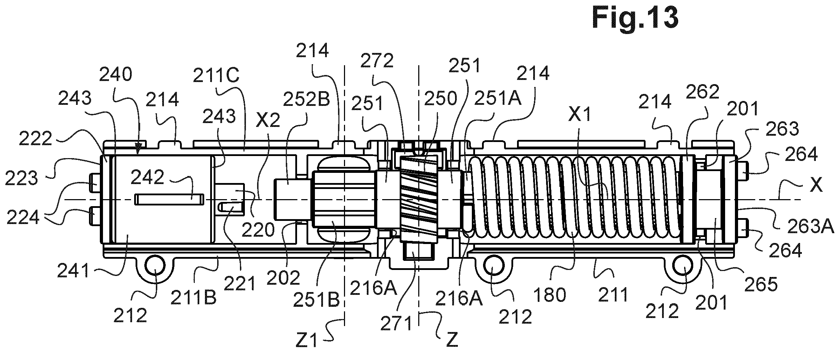

Selon le deuxième mode de réalisation représenté sur les figures 12 et 13, le ressort de torsion 180 est enroulé autour des deux axes de guidage 251A, 260 alignés, celui attaché à la roue denté 250 et celui attaché à la deuxième partie 265 de l'arbre d'entraînement en rotation. Une première extrémité du ressort de torsion 180 est engagée dans la fente 252A de l'axe de guidage 251A de manière à être liée à la roue dentée 250 et l'autre extrémité du ressort de torsion 180 est engagée dans la fente 260A de l'axe de guidage 260 de manière à être liée à ladite deuxième partie 265 de l'arbre d'entraînement en rotation.

Pour ajuster la contrainte de torsion du ressort de torsion 180 du système de pivotement 100 ;200, il suffit de visser ou de dévisser la vis de réglage 170 ;270 grâce à un tournevis dont la pointe est engagée dans la fente de la tête de manoeuvre 172 ;272 de ladite vis de réglage 170 ;270, de façon à tourner la roue dentée 150 ;250 dans le sens adéquat. La roue dentée 150 ;250 entraîne en rotation le plot cylindrique 151 ;251 correspondant ainsi que, le cas échéant, l'axe de guidage 251A attaché audit plot cylindrique 251, qui provoque alors simultanément la mise sous contrainte ou le relâchement de la contrainte du ressort de torsion 180.

L'ajustement de la contrainte du ressort de torsion 180 permet d'ajuster le couple de pivotement de la deuxième partie 165 ;265 de l'arbre d'entraînement en rotation et donc de l'arbre d'entraînement en rotation lui-même.

Ce couple de pivotement est amorti grâce à l'amortisseur 140 ;240.

Selon une caractéristique remarquable du système de pivotement 100 ;200, il est prévu un élément de blocage V2 ; V3, distinct de la vis de réglage 170 ;270, qui coopère directement ou indirectement avec la roue dentée 150 ;250 pour bloquer la rotation de cette roue dentée 150 ;250 autour de son axe X, X1.

Ici, quel que soit le mode de réalisation représenté sur les différentes figures, l'élément de blocage est avantageusement une vis de blocage V2 ; V3.

Comme le montrent les figures 1, 3, 4, 5, 9, 11, 12 et 15, le boîtier 110 ; 210 logeant l'arbre d'entraînement en rotation, l'amortisseur 140 ;240, le ressort de torsion 180 et ledit dispositif de réglage de la contrainte de torsion initiale du ressort de torsion, est percé d'un conduit traversant 119 ; 219 qui établit une communication entre l'intérieur et l'extérieur dudit boîtier 110 ; 210, et au travers duquel est engagé depuis l'extérieur ledit élément de blocage V2 ; V3 pour accéder à l'intérieur dudit boîtier 110 ; 210.

Ici, le conduit traversant 119 ; 219 est un conduit taraudé dans lequel la vis de blocage V2 ; V3 est vissée (voir les figures 4 et 11).

Le conduit traversant 119 ; 219 s'étend au travers d'une des deux coques 111 ; 211 selon un axe longitudinal Y ; Z1 transversal à l'axe longitudinal X dudit boîtier 110 ; 210.

Selon le premier mode de réalisation du système de pivotement 100 représenté sur les figures 1, 3, 4 et 5, l'axe longitudinal Y du conduit traversant 119 est un axe vertical par rapport à la position d'utilisation du boîtier 110 représentée sur la figure 1.

Selon ce premier mode de réalisation, ledit conduit traversant 119 traverse l'épaisseur de la paroi de la coque 111 et débouche à l'intérieur du boîtier 110 au droit d'un cran 150A du crantage de ladite roue dentée 150 (voir figure 4).

Après avoir ajuster la contrainte du ressort de torsion 180 en vissant et/ou en dévissant la vis de réglage 170 pour tourner la roue dentée 150, on visse la vis de blocage V2 au travers du conduit traversant 119, à l'aide d'un tournevis dont la pointe est introduite dans l'empreinte de la vis de blocage V2, de sorte que la pointe d'extrémité VE2 de la vis de blocage V2 est engagée dans ledit cran 150A de ladite roue dentée 150 et bloque la rotation de ladite roue dentée 150.

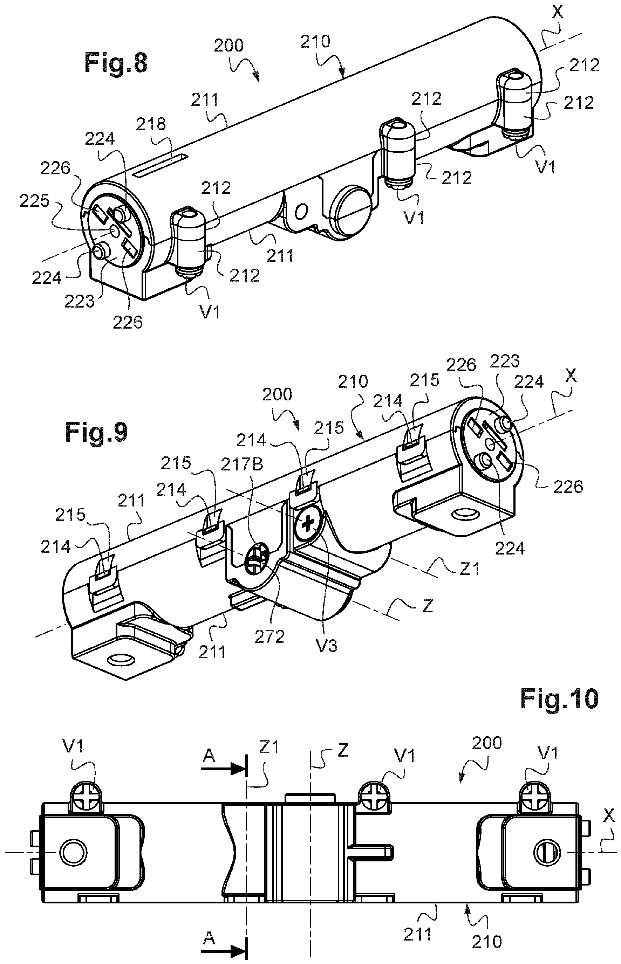

Selon le deuxième mode de réalisation du système de pivotement 200 représenté sur les figures 8 à 15, l'axe longitudinal Z1 du conduit traversant 219 est un axe horizontal, parallèle à l'axe Z autour duquel est entrainée en rotation la vis de réglage 270, par rapport la position d'utilisation du boîtier 210 représentée sur la figure 9.

Selon ce deuxième mode de réalisation, ledit conduit traversant 219 débouche à l'intérieur du boîtier 210 de manière décalée par rapport à ladite roue dentée 250, au droit d'un plot solidaire de ladite roue dentée 250. Le plot dont il s'agit ici, est le plot supplémentaire 251B au profil hexagonal. Le conduit traversant 219 présente une entrée qui traverse l'épaisseur d'une partie latérale de la paroi de la coque 211 correspondante du boîtier 210 et qui accueille la tête de la vis de blocage V3. Le conduit traversant 219 comporte une sortie qui traverse l'épaisseur d'une autre partie latérale de la paroi de la coque 111 du boîtier 210 (voir figure 15). Entre l'entrée et la sortie le conduit traversant 219 débouche dans ledit boîtier 210.

Après avoir ajusté la contrainte du ressort de torsion 180 en vissant et/ou en dévissant la vis de réglage 270 pour tourner la roue dentée 250, on visse la vis de blocage V3 au travers du conduit traversant 219 de sorte qu'une partie du filetage de son corps fileté VC3 accroche la surface externe hexagonal du plot supplémentaire 251B solidaire de ladite roue dentée 250 et bloque la rotation de ladite roue dentée 250.

Grâce à ce blocage, on évite qu'après un grand nombre de cycles de fonctionnement du système de pivotement 100 ; 200, la vis de réglage 170 ;270 ne se desserre et provoque un relâchement de la contrainte du ressort de torsion 180 ce qui peut entraîner une perte de puissance du système de pivotement à l'ouverture du support d'appareillage.

Le boîtier 110 ;210 fermé logeant l'ensemble des éléments décrits ci-dessus, est vissé à l'arrière du cadre de la plaque de façade.

L'arbre d'entraînement à rotation du système de pivotement 100 ; 200 est lié à des bielles qui coopèrent de manière glissante avec ledit support d'appareillage. Les bielles comprennent à cet effet un orifice central et plusieurs orifices périphériques disposés en cercle autour de l'orifice central. Les tétons 124,164 ;224,264 des disques 122,163 ; 222,263 d'extrémité des deux parties de l'arbre d'entraînement en rotation sont engagés dans deux orifices périphériques des bielles. En outre, une vis est engagée au travers de l'orifice central de chaque bielle et est vissée dans le conduit taraudé 125 ; 225 de la partie correspondante de l'arbre d'entraînement de rotation. De cette manière, les bielles sont solidement solidarisées aux deux disques 122,163 ; 222,263 d'extrémité de l'arbre d'entraînement en rotation.

Quel que soit le mode de réalisation représenté, le système de verrouillage de l'appareillage comprend de manière connue en soit, d'une part, au moins un bras de verrouillage déplaçable entre une position de verrouillage dans laquelle une partie de blocage dudit bras de verrouillage prend appui contre une surface de blocage du support d'appareillage et une position de libération dans laquelle ladite partie de blocage est écartée de ladite surface de blocage, et, d'autre part, une touche d'actionnement pour la commande du déplacement de chaque bras de verrouillage. Il est également prévu des moyens élastiques de rappel du bras de verrouillage dans sa position de verrouillage.

A l'état fermé de l'appareillage, le support d'appareillage est maintenu en position abaissée sous la plaque de façade par le bras de verrouillage. Pour ouvrir l'appareillage, l'utilisateur appuie avec un doigt sur la touche d'actionnement pour libérer le support d'appareillage dudit bras de verrouillage. Le ressort de torsion 180 du système de pivotement 100 ; 200 libère alors son énergie de torsion et provoquent le pivotement de l'arbre d'entrainement en rotation 120,165 ; 220,265. Celui-ci entraîne en pivotement les deux bielles qui glissent contre le support d'appareillage et entraînent en rotation le support d'appareillage qui pivote jusqu'à atteindre sa position relevée au-dessus de la plaque de façade, donc au-dessus de la paroi de réception.

Le support d'appareillage atteint sa position relevée stable lorsque son élément de butée arrive en butée au fond de la rainure de butée de la plaque de façade.

Dans cette position relevée, la façade fonctionnelle de l'appareillage est accessible à l'utilisateur au-dessus de la paroi de réception.

Pour fermer l'appareillage, il suffit d'exercer une pression sur le couvercle de l'appareillage de manière à faire basculer le support d'appareillage vers sa position abaissée sous la plaque de façade et donc sous la paroi de réception. Ce basculement inverse provoque le basculement inverse des bielles et donc le pivotement de l'arbre d'entraînement en rotation qui entraîne la torsion du ressort de torsion 180 du système de pivotement 100 ; 200. Ce ressort de torsion 180 emmagasine alors de nouveau de l'énergie de torsion. La position abaissée du support d'appareillage est atteinte lorsque la partie de blocage du bras de verrouillage prend appui contre la surface de blocage du support d'appareillage.

L'invention n'est pas limitée à la description détaillée et diverses autres modifications peuvent y être apportées dans le cadre des revendications annexées.

Bien entendu, diverses autres modifications peuvent aussi être apportées à l'invention dans le cadre des revendications annexées.

## Revendications

1. Système de pivotement (100 ;200) d'un support d'appareillage, qui comprend un arbre d'entraînement en rotation (120,165 ;220,265), un amortisseur (140 ;240), un ressort de torsion (180) sous contrainte lié à l'arbre d'entraînement en rotation, et un dispositif de réglage de la contrainte de torsion initiale du ressort de torsion (180), qui comprend une roue dentée (150 ;250) liée au ressort de torsion (180) et une vis de réglage (170 ;270) dont le corps fileté coopère avec le crantage de la roue dentée (150 ;250) de sorte que le vissage/dévissage de la vis de réglage provoque la rotation de la roue dentée autour de son axe, système de pivotement
**caractérisé en ce qu'** il est prévu un élément de blocage (V2 ;V3), distinct de la vis de réglage (170 ;270), qui coopère directement ou indirectement avec la roue dentée (150 ;250) pour bloquer la rotation de cette roue dentée (150 ;250) autour de son axe.

2. Système de pivotement (100 ;200) selon la revendication 1, qui comprend un boîtier (110 ;210) logeant l'arbre d'entraînement en rotation (120,165 ;220,265), l'amortisseur (140 ;240), le ressort de torsion (180) et ledit dispositif de réglage de la contrainte de torsion initiale du ressort de torsion, dans lequel ledit boîtier (110 ;210) est percé d'un conduit traversant (119 ;219) qui établit une communication entre l'intérieur et l'extérieur dudit boîtier (110 ;210), et au travers duquel est engagé depuis l'extérieur ledit élément de blocage (V2 ;V3) pour accéder à l'intérieur dudit boîtier (110 ;210).

3. Système de pivotement (100 ;200) selon la revendication précédente, dans lequel ledit conduit traversant (119 ;219) s'étend selon un axe longitudinal (Y ; Z1) transversal à l'axe longitudinal (X) dudit boîtier (110 ;210).

4. Système de pivotement (100) selon l'une des revendications 2 à 3, dans lequel ledit conduit traversant (119) débouche à l'intérieur du boîtier (110) au droit d'un cran (150A) du crantage de ladite roue dentée (150).

5. Système de pivotement (100) selon la revendication précédente, dans lequel ledit élément de blocage (V2) est engagé au travers dudit conduit traversant (119) du boîtier de sorte qu'une partie d'extrémité (VE2) est engagée dans ledit cran (150A) de ladite roue dentée (150).

6. Système de pivotement (200) selon l'une des revendications 2 à 3, dans lequel ledit conduit traversant (219) débouche à l'intérieur du boîtier (210) de manière décalée par rapport à ladite roue dentée (250), au droit d'un plot (251B) solidaire de ladite roue dentée (250).

7. Système de pivotement (200) selon la revendication précédente, dans lequel ledit élément de blocage (V3) est engagé au travers dudit conduit traversant (219) du boîtier (210) de sorte qu'une partie de son corps (VC3) accroche la surface externe du plot (215B) solidaire de ladite roue dentée (250).

8. Système de pivotement (100 ;200) selon l'une des revendications 2 à 7, dans lequel ledit élément de blocage est une vis de blocage (V2 ; V3) vissée dans un taraudage dudit conduit traversant (119 ;219).

9. Système de pivotement (100 ;200) selon l'une des revendications précédentes, dans lequel ledit ressort de torsion (180) est enroulé autour d'un axe de guidage (160 ;251A,260).

10. Système de pivotement (200) selon la revendication précédente, dans lequel l'axe de guidage est formé de deux parties (251A,260) distinctes, alignées, dont l'une est solidaire de la roue dentée (250) et l'autre est solidaire de l'arbre d'entraînement en rotation (265).

11. Système de pivotement (200) selon la revendication précédente, dans lequel les deux parties (251A,260) distinctes de l'axe de guidage sont de longueurs identiques ou de longueurs différentes avec la partie plus longue solidaire de l'arbre d'entraînement en rotation.

12. Appareillage à encastrer dans une paroi de réception, qui comprend un support d'appareillage, un système de pivotement (100 ;200) selon l'une des revendications précédentes et deux bielles parallèles, agencées de manière à transmettre le mouvement de rotation de l'arbre d'entraînement en rotation audit support d'appareillage.

## Patentansprüche

1. Schwenksystem (100; 200) für einen Geräteträger, das eine Antriebswelle für Drehantrieb (120, 165; 220, 265), einen Dämpfer (140; 240), eine mit der Antriebswelle für Drehantrieb verbundene vorgespannte Torsionsfeder (180) und eine Vorrichtung zum Einstellen der Ausgangsvorspannung der Torsionsfeder (180) aufweist, die ein mit der Torsionsfeder (180) verbundenes Zahnrad (150; 250) und eine Einstellschraube (170; 270) aufweist, deren mit einem Gewinde versehener Körper mit der Zahnung des Zahnrads (150; 250) zusammenwirkt, so daß ein Hineinschrauben/Herausschrauben der Einstellschraube das Drehen des Zahnrads um seine Achse bewirkt,
Schwenksystem, das **dadurch gekennzeichnet ist, daß** ein von der Einstellschraube (170; 270) verschiedenes Blockierelement (V2; V3) vorgesehen ist, das direkt oder indirekt mit dem Zahnrad (150; 250) zusammenwirkt, um das Drehen des Zahnrads (150; 250) um dessen Achse zu blockieren.

2. Schwenksystem (100; 200) gemäß Anspruch 1, das ein die Antriebswelle für Drehantrieb (120, 165; 220, 265), den Dämpfer (140; 240), die Torsionsfeder (180) und die Vorrichtung zum Einstellen der Ausgangsvorspannung der Torsionsfeder aufnehmendes Gehäuse (110; 210) aufweist, wobei in das Gehäuse (110; 210) ein Durchgang (119; 219) gebohrt ist, der eine Verbindung zwischen dem Inneren und dem Äußeren des Gehäuses (110; 210) herstellt und durch den das Blockierelement (V2, V3) von außen eingebracht ist, um in das Innere des Gehäuses (110, 210) zu gelangen.

3. Schwenksystem (100; 200) gemäß dem vorangehenden Anspruch, wobei sich der Durchgang (119; 219) entlang einer quer zur Längsachse (X) des Gehäuses (110, 210) verlaufenden Längsachse (Y, Z1) erstreckt.

4. Schwenksystem (100) gemäß einem der Ansprüche 2 bis 3, wobei der Durchgang (119) in das Innere des Gehäuses (110) gegenüber einer Kerbe (150A) der Zahnung des Zahnrads (150) mündet.

5. Schwenksystem (100) gemäß dem vorangehenden Anspruch, wobei das Blockierelement (V2) durch den Durchgang (119) geführt ist, so daß ein Endteil (VE2) in die Kerbe (150A) des Zahnrads (150) eingreift.

6. Schwenksystem (200) gemäß einem der Ansprüche 2 bis 3, wobei der Durchgang (219) gegenüber dem Zahnrad (250) versetzt gegenüber einer Abflachung (251B) des Zahnrads (250) in das Innere des Gehäuses (210) mündet.

7. Schwenksystem (100) gemäß dem vorangehenden Anspruch, wobei das Blockierelement (V3) durch den Durchgang (219) des Gehäuses geführt ist, so daß ein Teil seines Körpers (VC3) an der äußeren Oberfläche der Abflachung (215B) des Zahnrads (250) festhakt.

8. Schwenksystem (100; 200) gemäß einem der Ansprüche 2 bis 7, wobei das Blockierelement eine Blockierschraube (V2; V3) ist, die in ein Innengewinde des Durchgangs (119; 219) geschraubt ist.

9. Schwenksystem (100; 200) gemäß einem der vorangehenden Ansprüche, wobei die Torsionsfeder (180) um eine Führungsachse (160; 251A, 260) gewickelt ist.

10. Schwenksystem (200) gemäß dem vorangehenden Anspruch, wobei die Führungsachse aus zwei aufeinander ausgerichteten getrennten Teilen gebildet ist, wobei der eine mit dem Zahnrad (250) fest verbunden ist und der andere mit der Antriebswelle für Drehantrieb (265) fest verbunden ist.

11. Schwenksystem (200) gemäß dem vorangehenden Anspruch, wobei die beiden getrennten Teile (251A, 260) der Führungsachse gleiche oder verschiedene Längen haben, wobei der längere Teil mit der Antriebsachse für Drehantrieb fest verbunden ist.

12. Gerät zum Einbauen in eine aufnehmende Wand, das einen Geräteträger, ein Schwenksystem (100; 200) gemäß einem der vorangehenden Ansprüche und zwei parallele Stangen aufweist, die so ausgelegt sind, daß die Bewegung der Antriebswelle für Drehantrieb auf den Geräteträger übertragen wird.

## Claims

1. System (100; 200) for pivoting a switchgear mounting, which comprises a rotary drive shaft (120, 165; 220, 265), a damper (140; 240), a stressed torsion spring (180) linked to the rotary drive shaft, and a device for adjusting the initial torsion stress of the torsion spring (180), which comprises a cogwheel (150; 250) linked to the torsion spring (180) and an adjustment screw (170; 270), the threaded body of which engages with the notching of the cogwheel (150; 250) such that the screwing/unscrewing of the adjustment screw causes the rotation of the cogwheel about its axis, pivoting system, **characterised in that** a blocking element (V2; V3) is provided, distinct from the adjustment screw (170; 270), which directly or indirectly engages with the cogwheel (150; 250) to block the rotation of this cogwheel (150; 250) about its axis.

2. Pivoting system (100; 200) according to claim 1, which comprises a casing (110; 210) housing the rotary drive shaft (120, 165; 220; 265), the damper (140; 240), the torsion spring (180) and said device for adjusting the initial torsion stress of the torsion spring, wherein said casing (110; 210) is pierced with a through conduit (119; 219), which establishes a communication between the inside and the outside of said casing (110; 210), and through which said blocking element (V2; V3) is engaged from the outside, to access the inside of said casing (110; 210).

3. Pivoting system (100; 200) according to the preceding claim, wherein said through conduit (119; 219) extends along a longitudinal axis (Y; Z1) transverse to the longitudinal axis (X) of said casing (110; 210).

4. Pivoting system (100) according to one of claims 2 to 3, wherein said through conduit (119) opens inside the casing (110) to the right of a notch (150A) of the notching of said cogwheel (150).

5. Pivoting system (100) according to the preceding claim, wherein said blocking element (V2) is engaged through said through conduit (119) of the casing, such that an end part (VE2) is engaged in said notch (150A) of said cogwheel (150).

6. Pivoting system (200) according to one of claims 2 to 3, wherein said through conduit (219) opens inside the casing (210), in an offset manner with respect to said cogwheel (250), to the right of a stud (251B) secured to said cogwheel (250).

7. Pivoting system (200) according to the preceding claim, wherein said blocking element (V3) is engaged through said through conduit (219) of the casing (210), such that a part of its body (VC3) engages the external surface of the stud (215B) secured to said cogwheel (250).

8. Pivoting system (100; 200) according to one of claims 2 to 7, wherein said blocking element is a blocking screw (V2; V3) screwed in a thread of said through conduit (119; 219).

9. Pivoting system (100; 200) according to one of the preceding claims, wherein said torsion spring (180) is wound about a guiding axis (160; 251A, 260).

10. Pivoting system (200) according to the preceding claim, wherein the guiding axis is formed of two aligned, distinct parts (251A, 260), one of which is secured to the cogwheel (250) and the other is secured to the rotary drive shaft (265).

11. Pivoting system (200) according to the preceding claim, wherein the two distinct parts (251A, 260) of the guiding axis are of identical lengths or of different lengths with the longer part secured to the rotary drive shaft.

12. Switchgear for installation in a receiving wall, which comprises a switchgear mounting, a pivoting system (100; 200) according to one of the preceding claims and two parallel connecting rods, arranged so as to transmit the rotary movement of the rotary drive shaft to said switchgear mounting.
